# EUROPÄISCHE PATENTSCHRIFT

(11) **EP 0 727 607 B1**
(45) Veröffentlichungstag und Bekanntmachung des Hinweises auf die Patenterteilung: **02.08.2000**
(21) Anmeldenummer: 96100912.3
(22) Anmeldetag: 23.01.1996
(51) Int. Cl.: F16P 3/00, F24C 7/08

(54) **Eingabeschaltung für im Betrieb ein Gefahrenpotential darstellende Geräte**
Input circuitfor a potentially dangerous apparatus
Circuit d'entrée pour un dispositif potentiellement dangereux

(30) Priorität: 14.02.1995 DE 19504903
(43) Veröffentlichungstag der Anmeldung: 21.08.1996
(73) Patentinhaber: BSH Bosch und Siemens Hausgeräte GmbH, 81669 München (DE)
(72) Erfinder: Erdmann, Klaus, Dipl.-Ing. (FH), D-75015 Bretten (DE); Gramlich, Walter, D-76646 Bruchsal (DE)

(56) Entgegenhaltungen:
- WO-A-93/14350
- DE-A- 2 923 155
- DE-A- 3 613 263
- PATENT ABSTRACTS OF JAPAN vol. 11, no. 87 (P-557), 17.März 1987 & JP-A-61 240301 (MATSUSHITA ELECTRICAL IND CO), 25.Oktober 1986,
- PATENT ABSTRACTS OF JAPAN vol. 7, no. 95 (M-209), 21.April 1983 & JP-A-58 019627 (MATSUSHITA DENKI SANGYO KK), 4.Februar 1983,

## Beschreibung

Die vorliegende Erfindung bezieht sich auf eine Eingabeschaltung für im Betrieb ein Gefahrenpotential darstellende Geräte, insbesondere für Haushaltsgeräte, wie Herde, mit einer Starttaste und einer Stoptaste, über deren Betätigung ein Funktionsablauf gestartet bzw. beendet wird und mit Funktionsauswahl- und sonstigen Eingabeelementen.

Eingabeschaltungen für Geräte, deren Funktionsabläufe gegen unbeabsichtigte Eingaben geschützt sein sollen und insbesondere solche, die im Betrieb ein Gefahrenpotential darstellen, sollen möglichst gegen unbeabsichtigte Eingaben von Funktionseinstellungen über ungewollte oder nicht vorgesehene Betätigung der Eingabeorgane geschützt werden. Zu diesem Zweck ist es bekannt geworden, mechanische und soweit dies sich schaltungstechnisch anbietet, auch elektrische oder elektronische Verriegelungsmechanismen den Eingabeschaltungen derartiger Geräte zuzuordnen. Durch Benutzung eines Schlüssels, sei es ein mechanischer Schlüssel oder sei es ein elektronischer Schlüssel in Form einer Codezahl oder eines Codewortes, sind derartige Eingabeblockierungen und Entblockierungen realisierbar.

Geräte im Haushalt haben derartige Eingabeblockierungen üblicherweise als Kindersicherungen. So soll es beispielsweise Kindern nicht möglich sein, unkontrolliert Fernsehsendungen einzuschalten oder aber Herde oder insbesondere Kochfelder in Betrieb zu nehmen, da diese Heizstellen die Gefahr in sich bergen, bei Berührungen Verbrennungen hervorzurufen oder aber bei Überhitzungen auch Brände zu indizieren.

Insbesondere im Haushalt sollen aber die Maßnahmen, die eine Eingabeblockierung und Entblockierung bei Haushaltsgeräten beeinflussen, möglichst so ausgeführt sein, daß sie für berechtigte Bedienungspersonen einfach nachvollziehbar sind.

Es ist Aufgabe der Erfindung, eine Eingabeschaltung mit einer entsprechenden Eingabesicherung aufzuzeigen, welche diesen Anforderungen gerecht wird. Dabei wird von einer Eingabeschaltung ausgegeben, welche Eingabeelemente für einen Start eines durchzuführenden Funktionsablaufs und für den Stop eines Funktionsablaufs sowie für die Auswahl von Funktionskriterien bezüglich Zeitdauer, Art der Funktion, Leistungsmerkmalen usw. enthält.

Eine Eingabeschaltung, die den genannten Forderungen gerecht wird, ist erfindungsgemäß gekennzeichnet zum einen dadurch, daß in der Eingabeschaltung eine über einen vorgegebenen zeitlichen Grenzwert hinaus durch Betätigen der Starttaste ansteuerbare Schalteinheit angeordnet ist, daß diese Schalteinheit der Funktions- und/oder Ablauf-Steuereinheit derart zugeschaltet ist, daß diese bei überschrittenem Grenzwert gegen einzugebende Änderungen blockiert ist, und daß bei durch Betätigung der Starttaste über den Zeitgrenzwert hinaus hervorgerufener Eingabeblockierung diese durch einfaches Betätigen der Stoptaste lösbar ist, und zum anderen
dadurch, daß in der Eingabeschaltung eine über einen vorgegebenen zeitlichen Grenzwert hinaus durch Betätigung der Stoptaste ansteuerbare Schalteinheit angeordnet ist, daß diese Schalteinheit der Funktions- und/oder Ablaufsteuereinheit derart zugeschaltet ist, daß diese bei überschrittenem Grenzwert gegen einzugebende Änderungen blockiert ist, und daß bei durch Betätigung der Stoptaste über den vorgegebenen Zeitwert hinaus betätigbarer Eingabeblockierung diese durch Betätigung der Starttaste über einen vorgegebenen Zeitwert hinaus löschbar ist.

Der vorgegebene zeitliche Grenzwert wird sich zwischen 3 und 6 sec als praktikabel und zweckmäßig erweisen und dürfte bei ca. 5 sec einen brauchbaren Wert erreichen. Die Sicherung gegen ungewollte Eingaben wirkt sich bei einer Eingabeschaltung nach den erfindungsgemäßen Merkmalen dahingehend aus, daß eine Betätigung der Stoptaste über den vorgegebenen zeitlichen Grenzwert hinaus dazu führt, daß neben der Löschung der gegebenenfalls eingegebenen Funktionsbefehle eine Eingabe neuer Funktionsbefehle verhindert wird, solange nicht vorab auch die Starttaste über einen vorgegebenen zeitlichen Grenzwert hinaus betätigt wird. Bei Betätigung der Starttaste für diesen Zweck wird jedoch das Gerät selbst bezüglich seiner Funktionsmöglichkeiten noch nicht in Betrieb gesetzt, da eine Funktionseingabe zu diesem Zeitpunkt noch nicht vorliegt und nicht vorliegen kann. Nach der Eingabe der Funktionssteuerbefehle können diese bei einfacher Betätigung der Starttaste in Lauf gesetzt werden, und zwar-wenn die Starttaste übergangslos bzw. gesondert über einen vorgegebenen zeitlichen Grenzwert hinaus betätigt wird - gesichert gegen Veränderungen durch nicht zugelassene Eingabemaßnahmen. Das Ausschalten des Geräts und gewünschtermaßen der Eingabeblockierung ist lediglich durch Betätigen der Stoptaste möglich, und zwar ohne zeitliche Vorgaben. Dies ist erforderlich, um in Gefahrensituationen das Gerät von jedermann außer Betrieb setzen zu lassen.

Um auch anzuzeigen, daß eine Eingabesicherung ein- oder ausgeschaltet ist, bietet es sich an, diese Tatsache zu signalisieren, und zwar beispielsweise durch eine Signallampe, beispielsweise mit Schlüsselsymbolik.

Bei Herden im Haushalt sind Eingabeschaltungen, die mit den erfindungsgemäßen Merkmalen in einfacher Weise zu ergänzen sind, üblicherweise lediglich für die Ansteuerung der Back-/Bratofenmuffel vorgesehen, während die Kochstellen von individuellen Eingabeorganen auf ihre Heizleistungswerte bzw. Temperaturen einstellbar sind. In diesem Falle läßt sich jedoch die erfindungsgemäße Maßnahme zur Einschaltsicherung von der Back-/Bratofensteuerung übernehmen, z.B. derart, daß bei Betätigung der Stoptaste über den vorgegebenen zeitlichen Grenzwert hinaus die Stromversorgung zu den einzelnen Kochstellen hin generell unterbunden wird und erst wieder ermöglicht wird, wenn die Starttaste über einen vorgegebenen zeitlichen Grenzwert hinaus betätigt wird und die Blockaden damit aufhebt. Die Blockade für die Kocheinstellung kann über eine Relaisschaltung oder über elektronische Schaltelemente erfolgen.

Die Start- und Stop-Taste mit den Blockierungs- und Entriegelungs-Eingabefunktionen können auch einstückig realisiert sein, z.B. in Form eines sich in der Ausgangsmittellage zurückstellender Dreh- oder Schiebeschalters mit gegenläufigen Betätigungsrichtungen für Start und Stop bzw. für Eingabeblockierung und Entriegelung.

## Patentansprüche

1. Eingabeschaltung für im Betrieb ein Gefahrenpotential darstellende Geräte, insbesondere für Haushaltsgeräte, wie Herde, mit einer Starttaste und einer Stoptaste, über deren Betätigung ein Funktionsablauf gestartet bzw. beendet wird und mit Funktionsauswahl- und sonstigen Eingabeelementen, **dadurch gekennzeichnet**, daß in der Eingabeschaltung eine über einen vorgegebenen zeitlichen Grenzwert hinaus durch Betätigen der Starttaste ansteuerbare Schalteinheit angeordnet ist, daß diese Schalteinheit der Funktions- und/oder Ablauf-Steuereinheit derart zugeschaltet ist, daß diese bei überschrittenem Grenzwert gegen einzugebende Änderungen blockiert ist, und daß bei durch Betätigung der Starttaste über den Zeitgrenzwert hinaus hervorgerufener Eingabeblockierung diese durch einfaches Betätigen der Stoptaste lösbar ist.

2. Eingabeschaltung für im Betrieb ein Gefahrenpotential darstellende Geräte, insbesondere für Haushaltsgeräte, wie Herde, mit einer Starttaste und einer Stoptaste, über deren Betätigung ein Funktionsablauf gestartet bzw. beendet wird und mit Funktionsauswahl- und sonstigen Eingabeelementen, **dadurch gekennzeichnet**, daß in der Eingabeschaltung eine über einen vorgegebenen zeitlichen Grenzwert hinaus durch Betätigung der Stop-taste ansteuerbare Schalteinheit angeordnet ist, daß diese Schalteinheit der Funktions- und/oder Ablaufsteuereinheit derart zugeschaltet ist, daß diese bei überschrittenem Grenzwert gegen einzugebende Änderungen blockiert ist, und daß bei durch Betätigung der Stoptaste über den vorgegebenen Zeitwert hinaus betätigbarer Eingabeblockierung diese durch Betätigung der Starttaste über einen vorgegebenen Zeitwert hinaus löschbar ist.

3. Eingabeschaltung nach einem der Ansprüche 1 oder 2, **dadurch gekennzeichnet**, daß eine am Blockierungszustand signalisierende Signaleinrichtung den Start-Stop-Eingabeelementen zugeordnet ist.

## Claims

1. Input circuit for apparatus exhibiting a potential risk in operation, especially for domestic appliances such as ovens, with a start button and stop button, by way of the actuation of which a functional sequence is started and ended respectively, and with function selection elements and other input elements, characterised in that a switch unit controllable in drive beyond a predetermined time limit value by actuation of the start button is arranged in the input circuit, that this switch unit is connected to the function and/or sequence control unit in such a manner that when the limit value is exceeded this is blocked to changes being input and that in the case of input blocking caused by actuation of the start button beyond the time limit value this is releasable by simple actuation of the stop button.

2. Input circuit for apparatus exhibiting a potential risk in operation, especially for domestic appliances such as ovens, with a start button and stop button, by way of the actuation of which a functional sequence is started and ended respectively, and with function selection elements and other input elements, characterised in that a switch unit controllable in drive beyond a predetermined time limit value by actuation of the stop button is arranged in the input circuit, that this switch unit is connected to the function and/or sequence control unit in such a manner that when the limit value is exceeded this is blocked to changes being input and that in the case of input blocking actuable by actuation of the stop button beyond the predetermined time value this is releasable by actuation of the start button beyond a predetermined time value.

3. Input circuit according to one of claims 1 and 2, characterised in that a signalling equipment signalling at the blocking state is associated with the start/stop input elements.

## Revendications

1. Circuit d'entrée pour des appareils présentant un danger potentiel en fonctionnement, en particulier pour des appareils ménagers, comme des cuisinières, comportant une touche de mise en marche et une touche d'arrêt, dont la manipulation met en marche, resp. met fin, à une séquence de fonctionnement, et comportant des éléments d'entrée de choix de fonction et autres, caractérisé en ce que, dans le circuit d'entrée est agencée une unité de commutation pouvant être commandée au-delà d'une valeur limite temporelle prédéterminée en actionnant la touche de mise en marche, en ce que cette unité de commutation est connectée à l'unité de commande de fonctionnement et/ou de séquence de sorte que celle-ci se bloque contre des changements à entrer en cas de dépassement de la valeur limite, et en ce que, lors d'un blocage d'entrées provoqué par l'actionnement de la touche de mise en marche au-delà de la valeur limite temporelle, celle-ci est déblocable par simple actionnement de la touche d'arrêt.

2. Circuit d'entrée pour des appareils présentant un danger potentiel en fonctionnement, en particulier pour des appareils ménagers, comme des cuisinières, comportant une touche de mise en marche et une touche d'arrêt, dont la manipulation met en marche, resp. met fin, à une séquence de fonctionnement, et comportant des éléments d'entrée de choix de fonction et autres, caractérisé en ce que, dans le circuit d'entrée est agencée une unité de commutation pouvant être commandée au-delà d'une valeur limite temporelle prédéterminée en actionnant la touche d'arrêt, en ce que cette unité de commutation est connectée à l'unité de commande de fonction et/ou de séquence de sorte que celle-ci se bloque contre des changements à entrer en cas de dépassement de la valeur limite, et en ce que, lors d'un blocage des entrées actionnable par la commande de la touche d'arrêt au-delà de la valeur limite prédéterminée, celle-ci est déblocable en actionnant la touche de mise en marche au-delà d'une valeur temporelle prédéterminée.

3. Circuit d'entrée selon l'une des revendications 1 ou 2, caractérisé en ce qu'aux éléments d'entrée de mise en marche/arrêt est attribué un dispositif de signalisation signalisant l'état de blocage.
